Europäisches Patentamt

European Patent Office

Office européen des brevets

(19)

(11) EP 0 858 181 A1

(12) DEMANDE DE BREVET EUROPEEN

(43) Date de publication:
12.08.1998 Bulletin 1998/33

(51) Int Cl.⁶: **H04L 1/06**, H04B 7/08

(21) Numéro de dépôt: 98400143.8

(22) Date de dépôt: 23.01.1998

(84) Etats contractants désignés:
AT BE CH DE DK ES FI FR GB GR IE IT LI LU MC NL PT SE
Etats d'extension désignés:
AL LT LV MK RO SI

(30) Priorité: 24.01.1997 FR 9700787

(71) Demandeurs:
• FRANCE TELECOM
75015 Paris (FR)
• THOMSON-CSF
75008 Paris (FR)

(72) Inventeurs:
• Mayrargue, Sylvie
94117 Arcueil Cedex (FR)
• Pipon, François
94117 Arcueil Cedex (FR)
• Vila, Pierre
94117 Arcueil Cedex (FR)

(74) Mandataire: Lincot, Georges et al
THOMSON-CSF-S.C.P.I.,
13, Avenue du Président
Salvador Allende
94117 Arcueil Cédex (FR)

(54) **Procédé d'égalisation multicapteurs dans un récepteur radioélectrique comportant un nombre déterminé de voies de réception et récepteur correspondant**

(57)    Le procédé consiste :

- à estimer (4) le canal de transmission sur chacune des voies,
- à estimer (4) la composante de bruit de fond plus interférence sur chacune des voies à partir de l'estimation du canal de transmission,
- à estimer(4) la matrice de corrélation spatiale, notée $\hat{R}_b$, de la composante de bruit de fond plus interférences du signal reçu,
- à calculer (3) un filtre spatio-temporel, composé pour chaque élément temporel discret du canal multicapteurs estimé d'un filtre spatial.
- à filtrer (3) temporellement les données sur les différents capteurs par le filtre spatio-temporel,

et à égaliser (5) le signal en sortie du filtre spatio temporel par une égalisation monodimentionnelle à un rythme symbole décidant les symboles transmis.

Les applications vont aux systèmes de transmission HF et au systèmes de communication radiomobile GSM.

FIG.3

## Description

La présente invention concerne un procédé permettant une égalisation multivoie dans un récepteur radioélectrique, permettant la réception d'un signal radioélectrique numérique de type modulation linéaire série (ou assimilée), sur au moins deux voies en présence de plusieurs trajets de propagation, appelés également multitrajets, et en présence de sources interférentes, appelées également brouilleurs.

L'invention concerne également un récepteur radioélectrique multivoie utilisant un tel procédé.

Elle s'applique notamment à la mise en oeuvre de systèmes de transmission HF et à celle des stations de base des systèmes de communication radio mobiles GSM.

Dans ces systèmes le signal transmis est issu de la modulation en phase et/ou en amplitude d'une porteuse par une suite de symboles dont une partie, connue du récepteur, est dénommée "séquences d'apprentissage".

Le canal peut être celui des transmissions dans la gamme des hautes fréquences, HF, permettant des communications à longue distance (des centaines à des milliers de kilomètres). Les multitrajets du canal HF sont dus aux réflexions multiples du signal sur les couches ionosphériques de l'atmosphère et le sol. Le canal peut être aussi celui des transmissions dans la gamme très hautes fréquences, UHF, qui est utilisé dans les communications radiomobiles (GSM par exemple). Les multitrajets du canal radiomobile sont dus aux réflexions multiples sur les surfaces de bâtiments et sur le relief terrestre.

Quant au brouillage, il peut être volontaire (brouillage large bande par exemple) ou involontaire (autres signaux de transmissions utilisant la même bande de fréquence).

Dans de nombreux systèmes actuellement en service, l'adaptation aux caractéristiques du canal de transmission est rendue possible par l'insertion dans la forme d'onde de séquences d'apprentissage connues du récepteur. Différentes solutions sont alors possibles pour réaliser l'égalisation adaptative du signal utile reçu. Plusieurs solutions sont notamment décrites dans un article de J.G. Proakis intitulé "Adaptive Equalization for TDMA Digital Mobile Radio", IEEE Trans. on Vehicular Techn., vol.40, n°2, Mai 1991. Le traitement de référence est une égalisation fondée sur un algorithme de Viterbi associée à une estimation du canal de transmission à l'aide des séquences d'apprentissage. Cette solution est couramment utilisée dans les systèmes GSM.

Dans le contexte des transmissions HF à hauts débits (2400 bauds), on lui préfère des solutions moins complexes. Elles sont fournies par une version simplifiée de l'algorithme de Viterbi, le M-algorithme notamment décrit dans un article de A.Baier et G. Heinrich, intitulé "Performance of M-algorithm MLSE equalizers in frequency-selective fading mobile radio channels", Proc. of 1989 International Conference on Communications, ICC'89, ou encore par un égaliseur à décision dans la boucle connu également sous la dénomination anglo-saxonne DFE abréviation pour "Decision Feedback Equalizer". Ce dernier peut être réalisé à partir de filtres auto-adaptatifs, adaptés par un algorithme du type moindres carrés récursifs de préférence à un algorithme du gradient pour des raisons de vitesse de convergence, ou calculé à partir d'une estimation du canal de transmission comme dans un article de P.K. Shukla et L.F. Turner, intitulé "Channel-estimation-based adaptive DFE for fading multipath radio channels", IEE Procedings-I, vol.138, n°6, décembre 1991.

En présence de "fading", la variation de la puissance des signaux reçus entraîne une dégradation des performances en terme de Taux d'Erreur Binaire, TEB. L'usage de plusieurs antennes dans des égaliseurs à diversité d'antennes permet de compenser cette dégradation en tirant profit de la différence entre les canaux de transmissions correspondant aux différentes antennes.

En présence de brouillage, ces techniques d'égalisation deviennent rapidement inefficaces, et des techniques spécifiques de lutte anti-brouillage sont nécessaires, telles que le codage correcteur d'erreur, l'excision de brouillage par filtrage à encoches ou l'utilisation de liaisons à évasion de fréquence. Ces techniques, utilisées dans de nombreux systèmes opérationnels, sont malgré tout limitées lorsque les interférences sont fortes et occupent toute la bande du signal utile. Dans ces conditions, il convient d'utiliser des moyens de lutte anti-brouillage plus performants basés sur l'utilisation des techniques de filtrage d'antennes.

Les techniques de filtrage d'antennes, apparues au début des années 60 et dont une synthèse est présentée dans la thèse de doctorat de l'université de Paris sud, juin 1991 de P. Chevalier, intitulée "Antenne adaptative: d'une structure linéaire à une structure non linéaire de Volterra", visent à combiner les signaux reçus par les différents capteurs constituant l'antenne, de façon à optimiser la réponse de celle-ci au scénario de signal utile et de brouilleurs.

Les conditions de propagation et de brouillage pouvant évoluer au cours du temps, il est nécessaire de pouvoir adapter l'antenne en temps réel à ces variations par l'utilisation d'une technique de filtrage d'antenne particulière appelée "antenne adaptative". Une antenne adaptative est une antenne qui détecte les sources d'interférences automatiquement, en construisant dans leur direction des trous de son diagramme de rayonnement, tout en améliorant la réception de la source utile, sans connaissance a priori sur les interférences et à partir d'une information minimale sur le signal utile. De plus, grâce à la capacité de poursuite des algorithmes utilisés, une antenne adaptative est capable de répondre automatiquement à un environnement changeant.

Jusqu'à une période très récente, il a toujours été envisagé dans les systèmes de transmission un fonctionnement indépendant des techniques d'égalisation adaptative monocapteur et d'antenne adaptative, ce qui conduit à des performances sous-optimales. Ainsi, le système décrit dans un article de R. Dobson intitulé "Adaptive antenna array", Brevet n° PCT/AU85/00157, Fev.1986, qui discrimine signaux utiles et brouilleurs par le temps, parvient à réjecter efficacement les interférences mais ne cherche pas à optimiser le rapport signal utile/bruit.

Dans un contexte de transmission, et lorsque des séquences d'apprentissage sont introduites dans la forme d'onde, il est préférable d'utiliser des techniques de traitement d'antenne à discrimination par la modulation car celles-ci permettent d'optimiser le rapport signal utile/bruit, tout en évitant la mise en oeuvre d'une étape de goniométrie. Mais la plupart de celles qui sont employées aujourd'hui utilisent des poids complexes sur chacun des capteurs de l'antenne adaptative. Une telle antenne permet la réjection des interférences, mais en présence de multitrajets de propagation :

- elle "pointe" dans la direction de l'un des trajets, c'est-à-dire remet en phase les contributions de ce trajet sur les différents capteurs (pour des capteurs omnidirectionnels, on obtient donc un gain en rapport signal à bruit de 10 log N, où N est le nombre de capteurs utilisés),
- et cherche à réjecter les trajets décorrélés de celui-ci, perdant ainsi l'énergie associée à ces trajets.

Afin d'améliorer les performances de cette dernière technique de traitement d'antenne, l'idée est de la coupler à une technique d'égalisation monocapteur. Des égaliseurs multivoies sont ainsi obtenus comportant une partie spatiale, composée de différents filtres disposés sur chacune des voies de réception, et une partie temporelle disposée en sortie de la partie spatiale.

Des récepteurs traitant conjointement les signaux issus de plusieurs antennes ont déjà été proposés pour combattre le "fading" sélectif engendré par les multitrajets, en environnement non brouillé; ce sont les égaliseurs à diversité spatiale. Comme en égalisation monocapteur, les solutions les plus souvent utilisées comprennent soit un algorithme de Viterbi, soit une structure DFE minimisant l'Erreur Quadratique Moyenne (EQM) entre une sortie obtenue et une sortie souhaitée.

Des égaliseurs à diversité spatiale fondés sur un algorithme de Viterbi sont proposés notamment dans :

- un article de P. Balaban & J. Salz intitulé "Optimum Diversity Combining and Equalization in Digital Data Transmission with Applications to Cellular Mobile Radio - Part I: Theoretical Considerations", IEEE Trans.on Com., vol. 40, n° 5, pp.885-894, mai 1992,
- un brevet de G.P. Labedz et al. (Motorola, Inc., Schaumburg, Iℓℓ., US) intitulé "Method and apparatus for diversity reception of time-dispersed signals", brevet 12.12.91 EP430481.A2,
- un brevet de Okanoue et Kazuhiro (Nec Corp., Tokyo, JP) intitulé, "Noise-immune space diversity receiver", brevet 29.03.91 EP 449327.A2 et,
- un article de P. Jung, M. Na β han et Y. Ma, intitulé "Comparison of Optimum Detectors for Coherent Receiver Antenna Diversity in GSM Type Mobile Radio Systems", Proc. of the 4th International Symposium on Personal, Indoor and Mobile Radio Communications, PIRMC'93, Yokohama, Japan, 1993.

Leur mise en oeuvre nécessite la connaissance a priori de la réponse impulsionnelle du canal de transmission. En absence de brouillage, la réponse impulsionnelle du canal est estimée à partir des symboles connus et des symboles décidés au fur et à mesure par l'égaliseur.

Des égaliseurs à diversité spatiale à structure DFE sont proposés dans l'article de P. Balaban & J. Salz et dans un article de K.E. Scott et S.T. Nichols, intitulé "Antenna Diversity with Multichannel Adaptive Equalization in Digital Radio", Proc. of International Conf. on Com., ICC'91, New York, USA, Juin 1991.

Le dernier égaliseur cité est réalisé avec des filtres auto-adaptatifs, dont les coefficients sont adaptés par un algorithme des moindres carrés. Pour l'égaliseur présenté par P. Balaban & J. Salz, les coefficients sont calculés à partir d'une estimée du canal de transmission. Le problème de l'environnement brouillé n'est pas abordé dans l'étude de ces égaliseurs.

Les égaliseurs à diversité spatiale cités ont été conçus pour combattre le "fading" sélectif engendré par les multitrajets du canal de transmission, mais nullement pour réjecter les interférences. Toutefois, parmi ceux-ci, seul l'égaliseur à diversité spatiale auto-adaptatif proposé par K. Scott & S. Nichols a la capacité de remplir cette dernière fonction. On obtient alors l'antenne transverse et récursive ayant fait l'objet de la Thèse de doctorat de l'ENST, juin 1988 de L. Féty intitulée "Méthodes de traitement d'antenne adaptées aux radiocommunications".

Cependant, ce traitement ne peut s'appliquer qu'à des canaux de transmission dont l'étalement temporel des multitrajets relativement à la durée symbole est réduit, ce qui n'est généralement pas le cas dans les transmissions HF à hauts débits et dans le système GSM. En effet, dans ce contexte, le nombre de coefficients à adapter est trop important pour que l'algorithme d'adaptation puisse converger sur une séquence connue d'apprentissage. Les autres égaliseurs à diversité spatiale présentés dépendent de l'estimation du canal de transmission guère réalisable en présence d'interférences. En outre ces égaliseurs n'intègrent pas de fonction de réjection d'interférences.

Afin de pallier les inconvénients précités, la Demanderesse a déposé une demande de brevet Français publiée sous le numéro 2 716 761 intitulée "Procédé permettant une égalisation multivoie dans un récepteur radioélectrique, en présence d'interférences et de multitrajets de propagation". Ce procédé assure conjointement un traitement d'égalisation multicapteurs du signal utile et un traitement de réjection de brouilleurs. Il présente l'avantage d'être optimal en présence de bruit blanc (bruit de fond + brouilleurs) temporellement, quelle que soit la nature du canal de propagation utile. Par contre, il conduit à une puissance de calcul qu'il peut être intéressant de réduire pour certaines applications.

A cet effet, une demande de brevet Français intitulée "procédé d'égalisation multicapteur permettant une réception multicapteur en présence d'interférences et de multitrajets de propagation, et récepteur pour sa mise en oeuvre" portant le numéro 95 14914 a été déposée le 15/12/95 par la Demanderesse. Elle concerne un égaliseur multicapteurs qui possède une puissance de calcul inférieure à la puissance de calcul du récepteur multicapteurs décrit dans la demande de brevet précitée mais qui peut conduire à des moins bonnes performances, lorsque le canal de propagation utile comporte plusieurs trajets, par le fait que le récepteur multicapteurs n'est pas optimal en présence de bruit blanc temporellement.

L'invention a pour but d'améliorer les performances du récepteur précédent (brevet 95 14914) en conduisant aux perfectionnements du récepteur 2 716 761, tout en diminuant la puissance de calcul de ce dernier. A cet effet, l'invention a pour objet, un procédé permettant une égalisation multicapteurs dans un récepteur radioélectrique comportant un nombre déterminé de voies de réceptions, caractérisé en ce qu'il consiste :

- à estimer le canal de transmission sur chacune des voies,
- à estimer la composante de bruit de fond plus interférence sur chacune des voies à partir de l'estimation du canal de transmission,
- à estimer la matrice de corrélation spatiale, notée $\hat{R}_b$, de la composante de bruit de fond plus interférences du signal reçu,
- à calculer, un filtre spatio-temporel, composé pour chaque élément temporel discret du canal multicapteurs estimé d'un filtre spatial.
- à filtrer temporellement les données sur les différents capteurs par le filtre spatio-temporel,
- et à égaliser le signal en sortie du filtre spatio temporel par une égalisation monodimensionnelle à un rythme symbole décidant les symboles transmis.

L'invention a également pour objet un récepteur mettant en oeuvre le procédé précité.

Le procédé selon l'invention a pour avantage qu'il permet une mise en oeuvre d'un nouvel égaliseur multicapteurs, possédant une puissance de calcul moindre que les égaliseurs précités tout en étant optimal lorsque le bruit est blanc temporellement et en permettant une réjection efficace des brouilleurs.

D'autres caractéristiques et avantages de l'invention apparaîtront dans la description qui suit faite en regard des dessins annexés qui représentent:

La figure 1 le format d'un burst GSM.
La figure 2 une représentation simplifiée d'un récepteur multicapteurs optimal.
La figure 3 les différentes étapes du procédé selon l'invention.
La figure 4 un exemple de réalisation d'un récepteur pour la mise en oeuvre du procédé selon l'invention.

Le procédé selon l'invention est basé sur une estimation de canal réalisée sur chacune des voies d'entrée d'un récepteur multicanaux qui permet le calcul des coefficients d'un filtre spatio-temporel agissant sur les données d'entrée. La sortie de ce filtre est traitée par un égaliseur monodimensionnel au rythme symbole, qui décide des symboles transmis. Ce dernier peut être notamment un égaliseur fondé sur l'algorithme de Viterbi, ou un égaliseur de type DFE.

Le procédé remplit conjointement les fonctions suivantes, à savoir une fonction de réjection de brouilleurs, une fonction d'optimisation du gain dans la direction des différents trajets utiles, avec une remise en phase de ceux-ci et une fonction de réduction des distorsions engendrées par les multitrajets associés au signal utile.

Les deux premières fonctions sont assurées par le filtre spatio-temporel, la troisième par l'égaliseur placé en sortie de celui-ci.

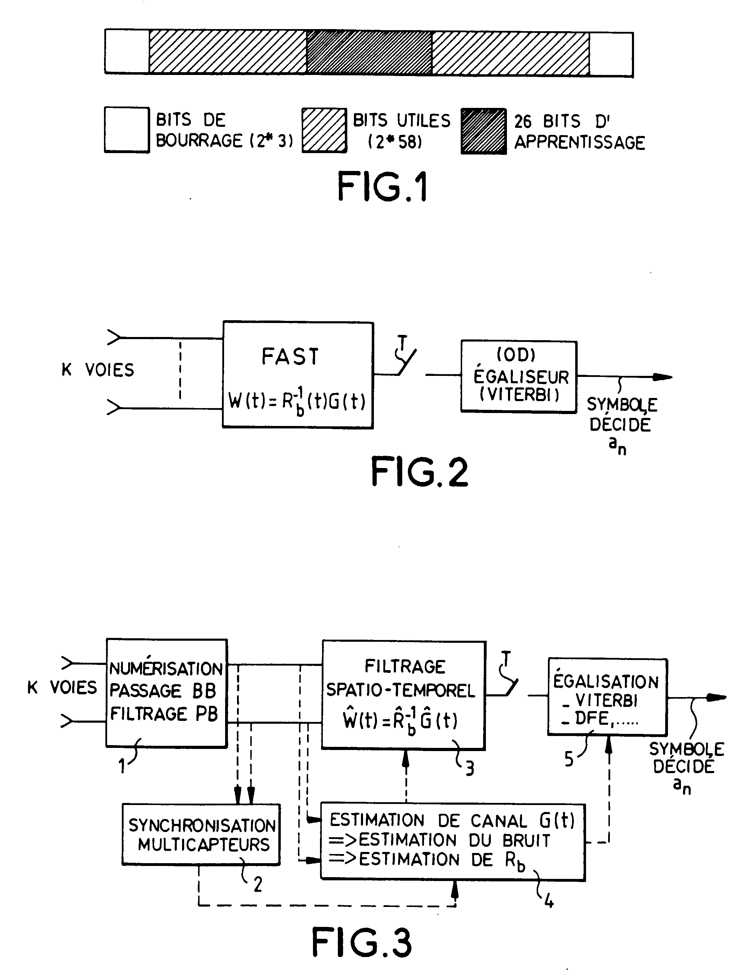

A titre d'exemple, la modulation utilisée peut être une modulation à phase continue GMSK d'indice 1/2 et de coefficient BT = 0,3 avec une période symbole égale à 48/13 µs. Les symboles transmis peuvent être constitués comme le montre la figure 1 par des burst de 148 symboles, décomposés en deux séquences de 3 bits de bourrage à chaque extrémité, une séquence d'apprentissage, composée de 26 bits connus, placée en milieu de trame et deux séquences de 58 bits d'information.

Les données $d_n$ représentant la suite $(d_n)$ des bits à transmettre sont codées différentiellement avant d'être modulées. L'information transmise est constituée d'une suite $(a_n)$, calculée à partir de la suite $(d_n)$ par les formules suivantes.

$$a_n = 1 \text{ si } d_n = d_{n-1} \text{ et } a_n = -1 \text{ si } d_n \neq d_{n-1} \qquad (1)$$

La modulation GMSK utilisée est du type de celle qui est décrite dans l'article de M. P.A. LAURENT ayant pour titre "Exact and approximate construction of digital phase modulation by superposition of amplitude modulated pulse (AMP)" et publié dans IEEE Trans Comm. Vol. 34 (1986) pp 150-160.

Celle-ci s'exprime de façon approchée sous la forme d'une modulation linéaire définie par la relation :

$$z(t) = \sum_n j^n b_n C_0(t) \quad \text{avec: } b_n = \prod_{k \leq n} a_k . \qquad (2)$$

où $C_0(t)$ est la première fonction principale de la modulation GMSK. Dans ce cas le signal modulé $z(t)$ peut aussi être mis sous la forme d'un produit de convolution tel que :

$$z(t) = \left( \sum_n s_n \delta(t) \right) * C_0(t) = s(t) * C_0(t) \quad \text{avec } s(t) = \sum_n s_n \delta(t) \qquad (3)$$

en notant $s_n = j^n b_n$

La suite $(s_n)$ constitue la suite des symboles transmis. La démodulation consiste à déterminer la suite $(s_n)$ puis à remonter ensuite à la suite des bits émis $(d_n)$.

Le signal émis $z(t)$ arrive sur un réseau de réception comportant K capteurs, après son passage dans le canal de propagation radiomobile. Le signal multicapteurs reçu s'exprime de la façon suivante, à partir du signal $s(t)$ :

$$X(t) = [X_1(t), ..., x_K(t)]^T = s(t) * G(t) + B(t),$$

où :

- $G(t)$ est le canal multicapteurs reçu, constitué de la forme d'onde globale émission $C_0(t)$, du filtre émission, du canal de propagation et du filtre de réception,

- $x_i(t)$ est le signal reçu sur le capteur i.

$X(t)$ peut aussi s'écrire en fonction des symboles transmis :

$$X(t) = \sum_n s_n G(t - nTs) + B(t). \qquad (4)$$

où Ts est la période-symbole.

Dans l'article de P. VILA, F. PIPON, D. PIREZ et L. FETY, "MLSE Antenna Diversity Equalization of a Jammed Frequency-Selective Fading Channel", Proc. EUSIPCO'94, pp. 1516-1519, Edinburgh, UK, September 1994, le récepteur multicapteurs optimal au sens de la minimisation de la probabilité d'erreur de décision sur la séquence transmise a été présenté. Ce récepteur optimal met en oeuvre de la façon représentée à la figure 2, un filtre Adapté Spatio-Temporel désigné ci-après sous l'abréviation "FAST", dont l'expression est donnée par la relation :

$$W(t) = R_b^{-1}(t) * G(t), \qquad (5)$$

où $R_b(t)$ est la fonction de corrélation du bruit $B(t)$. Il met également en oeuvre un échantillonneur T au rythme symbole et un organe de décision OD qui détermine la séquence de symboles transmise. L'organe de décision est fondé sur l'algorithme de Viterbi tel que décrit dans l'article de J.G. PROAKIS, "Adaptive Equalization for TDMA Digital Mobile Radio", IEEE Trans. on Vehicular Techn., vol 40, n°2, Mai 1991. Cet algorithme permet, à partir de la séquence $(y_n)$

obtenue en sortie du filtre "FAST", de trouver la séquence $(s^{k0}_n)$ d'indice $k_0$ qui minimise la probabilité d'erreur de décision sur la séquence de symboles transmis, ou encore de façon équivalente qui maximise le critère suivant :

$$\begin{cases} k0 = \arg MAX_k \left\{ j^k(X) = \sum_n j^k_n(X) \right\} \\\\ avec: j^k_n(X) = 2\ \mathrm{Re}\left[ s^{k^*}_n (y_n - \sum_{p<n} s^k_p \gamma_{n-p}) \right] - \left| s^k_n \right|^2 \gamma_0 \\\\ o\grave{u}: \quad - \gamma_n = G^+(-t) * W(t)_{t=nTs} \\\\ \quad\quad - y_n = W^+(-t) * X(t)_{t=nTs} \end{cases} \qquad (6)$$

L'algorithme de Viterbi travaille à partir du signal de sortie du filtre "FAST" $y_n$ et des coefficients $\gamma_n$.

La mise en oeuvre du traitement précédent dans des récepteurs multicapteurs permet d'obtenir une réception optimal au sens de la minimisation de la probabilité d'erreur de décision sur la séquence des symboles transmis en présence de bruit de fond et de brouilleurs.

Le récepteur multicapteurs de l'invention constitue une mise en oeuvre du récepteur multicapteurs optimal présenté ci-dessus dans le cas particulier où le bruit est blanc temporellement ($R_b(t) = R_b$). Il est donc optimal lorsque le brouilleur est blanc temporellement (ce qui est en première approximation le cas dans le système GSM où la modulation des brouilleurs est la modulation GMSK) et qu'il comporte un seul trajet de propagation, et ce quelle que soit la nature du canal utile.

Selon l'invention la matrice $R_b$ est estimée à l'aide d'un algorithme d'estimation de canal réalisée sur chacune des voies d'entrée. Les différentes étapes de traitement à mettre en oeuvre sont représentées sur l'organigramme de la figure 3.

La première étape, qui est représentée en 1 sur la figure 3 consiste à effectuer une numérisation des signaux appliqués sur les capteurs, à les transposer en bande de base puis à les filtrer par un filtre de réception. Un signal complexe échantillonné à une fréquence Fe multiple de la fréquence symbole Fs (Fe = 2 Fs pour l'exemple de réalisation) est obtenu en fin de l'étape 1.

L'étape 2, effectue la synchronisation du récepteur sur les symboles reçus. Celle-ci peut être réalisée de la façon décrite dans la demande de brevet de la Demanderesse déposée le 21 janvier 1994 intitulée "synchronisation en présence de brouilleurs et de multitrajets" et publiée sous le numéro 2 715 488, ou de tout autre procédé permettant une synchronisation en présence de brouilleurs et de multitrajets.

Elle permet de positionner le récepteur de telle sorte que le signal reçu X(n Te) s'exprime en fonction du signal émis s(n Te), s[(n-1) Te], ..., s[(n-L+1) Te], où L représente la longueur (en nombre d'échantillons) du canal de propagation utile prise en compte lors de la démodulation suivant la relation

$$X(n\ Te) = \sum_{p=0}^{L-1} s[(n-p)Te]\ G(p\ Te)\ +\ B(n\ Te) \qquad (7)$$

A titre d'exemple, en choisissant L = 12 (avec $F_2 = 2F_s$), le nombre d'états pris en compte dans l'algorithme de Viterbi est égal à $2^{(L/2)-1} = 32$.

Dans ces conditions les échantillons du signal s(n Te) s'expriment à partir des symboles émis par la relation : s[(2n) Te] = $s_n$ et s[(2n+1) Te] = 0.

L'étape 3 vise à effectuer n filtrages spatio-temporels lorsque le bruit est blanc temporellement. Elle nécessite l'estimation du canal utile $G$(t) et de la matrice de corrélation du bruit $R_b$. Cette estimation est réalisée à l'étape 4 en effectuant les estimations suivantes :

Une première estimation consiste à estimer le canal de transmission sur chacune des voies d'entrée : En désignant par $G_k$ le vecteur constitué à partir des échantillons temporels du canal de propagation sur la voie k:

$$G_k = (g_k(0), ..., g_k[(L-1)Te])^T. \tag{8}$$

où $g_k(t)$ représente le canal obtenu sur la voie k et en notant: $S(n\,Te), ..., \{s(n\,Te)\,s[(n-L+1\,)Te]\}^T$ le vecteur formé à l'aide des symboles connus de la séquence d'apprentissage, le signal reçu par l'antenne k s'écrit:

$$x_k(n\,Te) = G_k^H\,S(n\,Te) + b_k(n\,Te). \tag{9}$$

et l'estimation du canal sur la voie k est obtenue par la formule connue de Wiener :

$$\hat{G}_k = \hat{R}_{SS}^{-1}\,\hat{r}_{sx} \tag{10}$$

Dans le cadre de l'application GSM donnée en exemple, la matrice de corrélation $R_{SS}$ et le vecteur d'intercorrélation $r_{sx}$ peuvent être estimés sur les 16 bits placés au centre la séquence d'apprentissage (soit sur N=32 échantillons) par l'estimateur classique non biaisé :

$$\hat{R}_{SS} = \frac{1}{N}\sum_{n=0}^{N}S(nTe)S(nTe)^H$$

$$\tag{11}$$

$$\hat{r}_{Sx} = \frac{1}{N}\sum_{n=0}^{N}S(nTe)x_k(nTe)^*$$

où l'opérateur "H" représente l'opération de transposition-conjuguaison.

Les séquences d'apprentissage du système GSM sont choisies de façon à obtenir une annulation de la fonction d'autocorrélation sur 5 symboles de part et d'autre l'instant de t = 0. Dans ce cas la matrice $\hat{R}_{SS}$ est égale à la matrice identité et par suite l'estimation de canal est réalisée directement à partir de la connaissance du vecteur d'intercorrélation $\hat{r}_{Sx}$, d'où il vient $\hat{G}_k = \hat{r}_{Sx}$.

Une deuxième estimation consiste à estimer des échantillons de bruit sur chacune des voies d'entrée:

A partir de l'estimation du canal de propagation, il est en effet possible d'obtenir une estimation des échantillons de bruit sur chacune des voies d'entrée par la formule :

$$\hat{b}_k(nTe) = x_k(nTe) - \hat{G}_k^H\,S(nTe) \tag{12}$$

Ceci permet d'obtenir une estimée du vecteur bruit

$$\hat{B}(nTe) = \left[\hat{b}_1(nTe), ..., \hat{b}_K(nTe)\right]^T$$

pour les N échantillons utilisés par l'estimation de canal.

Une troisième estimation consiste à estimer la matrice de corrélation du bruit $\hat{R}_b$ :

La matrice de corrélation du bruit s'obtient à partir des échantillons de bruit estimés $\hat{B}(nTe)$ par l'estimateur classique non biaisé par la relation :

$$\hat{R}_b = \frac{1}{N}\sum_{n=0}^{N}\hat{B}(nTe)\hat{B}(nTe)^H \tag{13}$$

Le calcul des coefficients du filtre spatio-temporel est obtenu à l'étape 3 par la relation :

$$\left[\hat{\boldsymbol{W}}(0),\hat{\boldsymbol{W}}(Te),\ldots,\hat{\boldsymbol{W}}(L-1)Te\right]=\hat{R}_b^{-1}\left[\hat{\boldsymbol{G}}(0),\hat{\boldsymbol{G}}(Te),\ldots,\hat{\boldsymbol{G}}(L-1)Te\right] \quad (14)$$

Les coefficients du filtre sont obtenus, soit en résolvant l'ensemble des systèmes linéaires contenus dans l'équation (14), soit en inversant la matrice $R_b$ par toute méthode appropriée à l'inversion des matrices hermitiennes et notamment la méthode du pivot de Gauss.

Si la longueur du canal est inférieure au nombre de capteurs ($L \leq K$), il peut être avantageux, afin de réduire la puissance de calcul, de ne pas calculer $\hat{R}_b^{-1}$, mais de résoudre directement les 6 systèmes linéaires (par exemple, par la méthode du pivot de Gauss) : $\hat{R}_b \hat{\boldsymbol{W}}(iTe) = \hat{\boldsymbol{G}}(iTe)$.

L'étape 5 consiste à effectuer le calcul des coefficients utilisés par l'égaliseur de Viterbi : Les coefficients $\gamma_n$ utilisés par l'algorithme de Viterbi sont obtenus par la formule (6). Ceux-ci s'expriment aussi en fonction des vecteurs $\hat{\boldsymbol{G}}(iTe)$ et $\hat{\boldsymbol{W}}(iTe)$ suivant la relation :

$$\gamma_n = \sum_{i=0}^{L-1-2n} \hat{\boldsymbol{G}}^H(iTe)\hat{\boldsymbol{W}}\big((2n+i)Te\big) \quad (15)$$

Ces coefficients représentent le modèle de l'Interférence Inter Symbole en sortie du filtre spatio-temporel qui est à traiter par l'égaliseur monodimensionnel.

(Le facteur 2n est dû au fait que les coefficients utilisés par l'algorithme de Viterbi sont calculés au rythme-symbole).

Le filtrage spatio-temporel des signaux d'entrée est réalisé au rythme symbole à partir des filtres estimés lors de l'étape Précédente :

$$y(n) = \sum_{i=0}^{L-1} \hat{\boldsymbol{W}}(iTe)^H \, \hat{\boldsymbol{X}}(nTs+iTe) \quad (16)$$

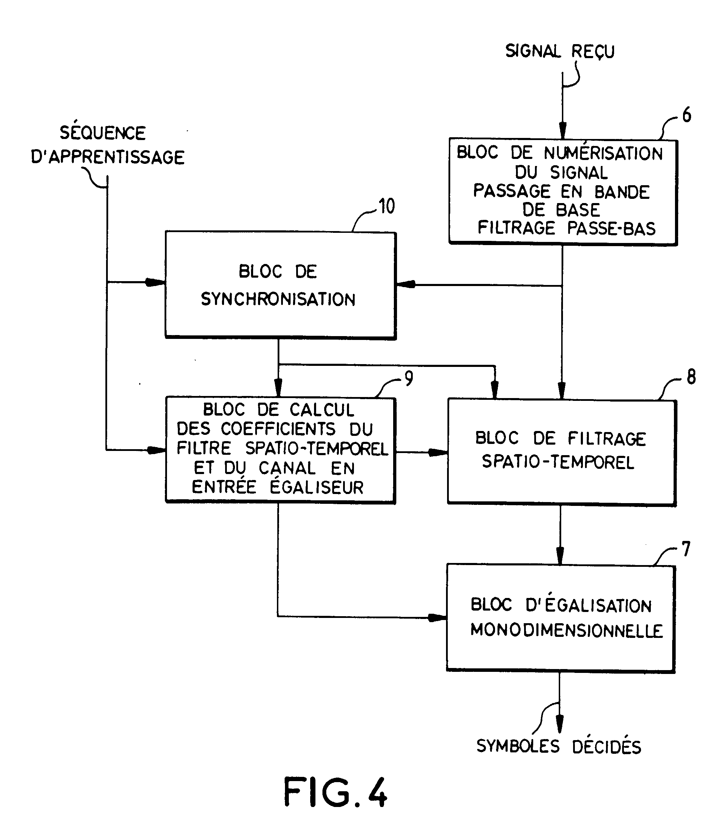

Un mode de réalisation d'un récepteur pour la mise en oeuvre du procédé selon l'invention est représenté à la figure 4. Celui-ci comprend un premier bloc 6 de numérisation du signal appliqué sur chacune des K voies de réception. Un deuxième bloc d'égalisation monodimensionnelle couplé au premier bloc 6 par l'intermédiaire d'un troisième bloc de filtrage spatio temporel 8. Un quatrième bloc 9 assure le calcul des coefficients du bloc de filtre spatio temporel 8 ainsi que ceux caractérisant le canal utile à l'entrée du bloc d'égalisation monodimensionnelle 7. Enfin un cinquième bloc 10 assure la synchronisation de signaux entre les différents blocs.

Dans un premier mode de réalisation d'un récepteur selon l'invention le bloc d'égalisation 7 peut être programmé pour récupérer les symboles transmis en minimisant la probabilité d'erreur de décision selon l'algorithme de Viterbi. Dans ce cas les coefficients $\gamma_n$ qui sont à prendre en compte pour exécuter l'algorithme de Viterbi sont ceux définis par la relation (15).

Ce mode de réalisation n'est cependant pas unique, et d'autres types d'algorithmes comme le "M algorithme" précité qui est une version simplifiée de l'algorithme de Viterbi ou encore une égalisation type DFE peuvent également être mis en oeuvre pour la réalisation du bloc d'égalisation 7. Toutefois les résultats obtenus par ces derniers modes de réalisation apparaîtront alors légèrement dégradés par rapport à ceux qui peuvent être fournis par une égalisation mettant en oeuvre l'algorithme de Viterbi. Ils pourront cependant être utilisés dans des applications où la puissance de calcul disponible est insuffisante pour l'exécution de l'algorithme de Viterbi.

**Revendications**

1. Procédé permettant une égalisation multicapteurs dans un récepteur radioélectrique comportant un nombre déterminé de voies de réceptions, caractérisé en ce qu'il consiste :

   - à estimer (4) le canal de transmission sur chacune des voies,
   - à estimer (4) la composante de bruit de fond plus interférence sur chacune des voies à partir de l'estimation du canal de transmission,
   - à estimer(4) la matrice de corrélation spatiale, notée $\hat{R}_b$, de la composante de bruit de fond plus interférences du signal reçu,

- à calculer (3) un filtre spatio-temporel, composé pour chaque élément temporel discret du canal multicapteurs estimé d'un filtre spatial.
- à filtrer (3) temporellement les données sur les différents capteurs par le filtre spatio-temporel,
- et à égaliser (5) le signal en sortie du filtre spatio temporel par une égalisation monodimentionnelle à un rythme symbole décidant les symboles transmis.

2. Procédé selon la revendication 1, caractérisé en ce que le filtre spatio-temporel, est composé, pour chaque élément temporel discret du canal n du canal multicapteurs estimé, d'un filtre spatial $\hat{W}$(n) obtenu par la formule : $\hat{W}$(n) = $\hat{R}_b^{-1}\hat{G}$(n) où $\hat{G}$(n) représente le résultat du filtrage effectué par le filtre spatio-temporel

3. Procédé selon la revendication 1, caractérisé en ce que l'égalisation (5) a lieu par exécution d'un algorithme de Viterbi.

4. Procédé selon la revendication 1, caractérisé en ce que l'égalisation (5) a lieu en utilisant un égaliseur de type DFE.

5. Procédé selon l'une quelconque des revendications 1 à 4, caractérisé en ce qu'il consiste à effectuer (1) une numérisation des signaux suivie d'une transposition et d'un filtrage.

6. Récepteur pour la mise en oeuvre du procédé selon l'une quelconque des revendications 1 à 5, caractérisé en ce qu'il comprend un premier bloc (6) de numérisation des signaux appliqués sur chacune des voies, un deuxième bloc (7) d'égalisation monodimensionnelle couplé au premier bloc (6) par l'intermédiaire d'un troisième bloc de filtrage spatio temporel (8), un quatrième bloc (9) de calcul des coefficients du filtre spatio temporel (8) et de calcul des coefficients caractéristiques du canal de transmission à appliquer sur le deuxième bloc d'égalisation (7).

BITS DE BOURRAGE (2*3)    BITS UTILES (2*58)    26 BITS D' APPRENTISSAGE

## FIG.1

K VOIES

FAST

$W(t) = R_b^{-1}(t)G(t)$

(OD) ÉGALISEUR (VITERBI)

SYMBOLE DÉCIDÉ $a_n$

## FIG.2

K VOIES

NUMÉRISATION PASSAGE BB FILTRAGE PB   1

FILTRAGE SPATIO-TEMPOREL $\hat{W}(t) = \hat{R}_b^{-1}\hat{G}(t)$   3

ÉGALISATION
_ VITERBI
_ DFE,.....   5

SYMBOLE DÉCIDÉ $a_n$

SYNCHRONISATION MULTICAPTEURS   2

ESTIMATION DE CANAL G(t)
=> ESTIMATION DU BRUIT
=> ESTIMATION DE $R_b$   4

## FIG.3

SIGNAL REÇU

BLOC DE NUMÉRISATION
DU SIGNAL
PASSAGE EN BANDE
DE BASE
FILTRAGE PASSE-BAS

6

SÉQUENCE
D'APPRENTISSAGE

10

BLOC DE
SYNCHRONISATION

9

BLOC DE CALCUL
DES COEFFICIENTS DU
FILTRE SPATIO-TEMPOREL
ET DU CANAL EN
ENTRÉE ÉGALISEUR

8

BLOC DE FILTRAGE
SPATIO-TEMPOREL

7

BLOC D'ÉGALISATION
MONODIMENSIONNELLE

SYMBOLES DÉCIDÉS

# FIG.4

Office européen
des brevets

**RAPPORT DE RECHERCHE EUROPEENNE**

Numéro de la demande

EP 98 40 0143

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | VILA P. ET AL.: "MLSE ANTENNA DIVERSITY EQUALIZATION OF A JAMMED FREQUENCY-SELECTIVE FADING CHANNEL" SIGNAL PROCESSING VII: THEORIES AND APPLICATIONS, PROCEEDINGS OF EUSIPCO 94, vol. 3, 13 - 16 septembre 1994, EDINBURGH, UK, pages 1516-1519, XP000677064 * sections 4.1, 4.3, 5.2 * * figure 2 * | 1-6 | H04L1/06 H04B7/08 |
| A,D | EP 0 669 729 A (THOMSON CSF) 30 août 1995 * page 6, ligne 39 - page 9, ligne 4 * * figure 3 * | 1-6 | |
| | | | **DOMAINES TECHNIQUES RECHERCHES (Int.Cl.6)** H04L H04B |

Le présent rapport a été établi pour toutes les revendications

| Lieu de la recherche | Date d'achèvement de la recherche | Examinateur |
|---|---|---|
| LA HAYE | 19 mai 1998 | Ghigliotti, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)